# EUROPEAN PATENT SPECIFICATION

(11) **EP 0 570 028 B1**
(45) Date of publication and mention of the grant of the patent: **28.07.1999**
(21) Application number: 93112296.4
(22) Date of filing: 28.12.1988
(51) Int. Cl.: E21B 17/042, F16L 15/06

(54) **Lengthened tubular pin member/nose for improving sealing integrity and bearing forces**
Länglicher rohrförmiger Stift/Nase zum Verbessern der Dichtheit und zur Aufnahme aller ausgeübten Kräfte
Elément tubulaire allongé fiche/nez pour l'amélioration de l'étanchéité et la reprise des contraintes

(30) Priority: 28.12.1987 US 138667
(43) Date of publication of application: 18.11.1993
(62) Divisional of application: 89901380.9
(73) Proprietor: HYDRIL COMPANY, Los Angeles California 90015 (US)
(72) Inventor: Tung, Lawrence Y., Houston, Texas 77064 (US)
(74) Representative: Stahlberg, W. J. H.

(56) References cited:
- WO-A-86/01252
- DE-B- 1 020 586
- US-A- 2 111 196

## Description

This invention pertains to tubular connections and particularly to tubular connections having a metal-to-metal seal forward of the threads of the pin member of the connection.

Tubular products, such as tubings and casings, made of high grade materials and operating under high pressure conditions, such as exist in deep hole applications, are subjected to high bearing stresses on both members of their connections and also correspondingly high hoop compression stresses on the pin members of their connections. Each connection includes at least one metal-to-metal conical sealing surface between its box member and its pin member, usually located on the forward end of the pin member just ahead of the thread set, or the most forward thread set when the connection includes two or more different diameter thread sets.

WO-A-8402948 discloses a tubular coupling with improved metal-to-metal seal having an even load distribution across the seal with a tendency to avoid galling. The coupling provides a seal at the end of the pin. A corresponding seal is provided on the box member with a surface having an angle that is greater than that of the surface of the seal on the pin member.

Although different connections include a sealing arrangement at different places, a popular location for a metal-to-metal seal location in a tubular connection is in a conical area located forward of the first thread in the pin member of the connection. This area is not within the threads and is usually made between matching surfaces of the pin member and the box member on a surface that has a slight longitudinal taper with respect to the axis of the connection. Usually this taper is on the order of about 7°, although very shallow tapers of about 2° and steeper tapers of about 14° are also fairly common.

In the prior art connections, the seal area on the pin member tapers from a point in front of the first thread to the top end of the pin member. The two mating surfaces come in contact as the connection is torqued so that when it is completely power torqued there is an area range within this overall area that is tightly press sealed together. Further, there is a short section in front of the most forward thread on the pin member where no sealing contact occurs. The conical metal-to-metal surface then progresses toward the tip or nose or distal end of the pin member. There is a small chamfer between the conical surface and the tip end. Therefore, the entire metal-to-metal sealing area is located between the chamfer and the non-sealing are in front of the first thread. It is assumed for purposes herein that the box member conical surface corresponding to the pin member conical surface is at an identical longitudinal taper. In many cases the box taper is slightly steeper than the taper of the pin member surface; however, this invention relates to such connections as well. For convenience of discussion, the taper of the pin member and the box member will be considered to be at the same angle.

Returning to the present seal condition of the connection, an analysis shows that the area where the surfaces are press-sealed together the hardest occurs in the conical seal area nearest the first thread on the pin member. That is, for identical conical sealing surfaces on the pin member and box member, although the area in sealing contact might appear casually to be the entire surface, only the approximate one-tenth to one-third of the area nearest the first thread will be leak sealed with respect to internal gas pressures above about 1.406 x 10¹⁰ gm⁻² (20,000 psi). Further with respect to the prior art connection just described, the metal of both the pin member and box member is stressed upon full torquing in a relative narrow concentration band. This is because the top end tends to flex slightly away from being tightly press-sealed.

Document DE-B-1020586 discloses a screw connection for casings used in deep drilling wells having conical sealing surfaces that interact, the sealing surface at the free end of the inside thread section having a softer or lower material hardness value than the accommodating hollow conical thread section to increase the effectiveness of the conical sealing surfaces. The free end of the inside thread section is hardened by soft annealing or by being a joined pre-welded soft iron ring, or by being grooved and fitted with a soft metal ring.

Therefore, it is a feature of the present invention to provide an improved tubular connection with a stiffer pin member in the vicinity of the seal on the forward end of the pin member to increase the integrity of the seal by increasing its bearing surface, thereby also reducing the tendency of the connection to galling.

It is another feature of the present invention to provide an improved tubular connection with a pin member having an extended nose in front of the seal area of the pin member to stiffen the pin member and thereby enhance the connection thereby.

Therefore, the present invention provides a threaded connection comprising a box member having internal threads and a pin member having external threads for mating with the threads on the box when the connection is made up, a conical seal surface of the pin between the threads and the end of the pin and a conical surface on the box for engaging the conical seal surface on the pin and forming a metal-to-metal seal when the connection is made up, characterized in that said pin further having an end portion spaced from the box and extending beyond the conical seal surface a distance at least equal to the projected length of the conical seal surface along the longitudinal axis of the connection to stiffen the pin and increase the area of the conical seal surfaces that are in sealing engagement.

Further features and advantages of the invention will become apparent from the following description of preferred embodiments of the invention together with the appended drawings wherein:

Fig.1 is a longitudinal cross-section of a tubular connection in accordance with a preferred embodiment of the present invention.

Fig. 2 is an enlargement of the forward end of the pin member employed in connection shown in Figure 1.

Fig. 3 is a schematic diagram of the forward end of alternative pin member structures employed in tubular connections.

Fig. 4 is a bearing contact stress distribution finite element analysis diagram of a tubular connection employing a short nose on the pin member in accordance with the prior art.

Fig. 5 is a bearing contact stress distribution finite element analysis diagram of a tubular connection employing a long nose on the pin member in accordance with a preferred embodiment of the present invention.

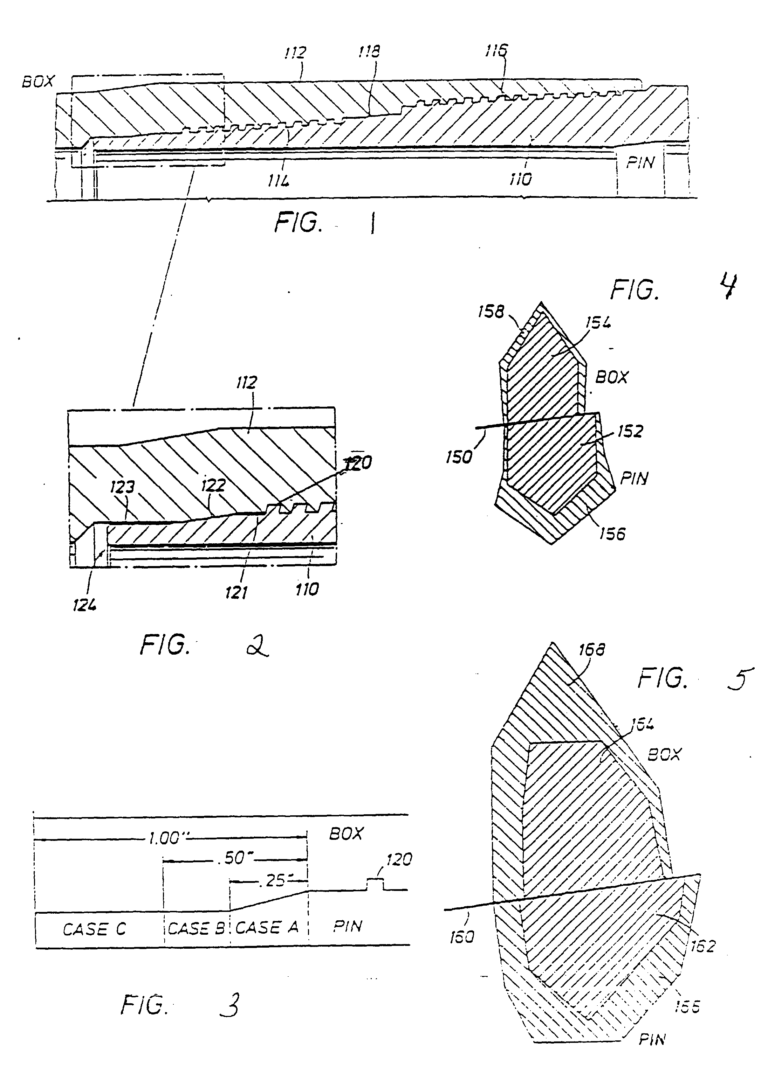

Figure 1 discloses a conventional premium tubular connection which is modified to illustrate the manner in which a bumper nose extension is provided on the pin member to locate the seal area away from the tip end of the member so as to stiffen the pin in the seal area in accordance with the invention.

The connection comprising pin member 110 and box member 112 illustrates a two-step thread arrangement comprising a thread set 114 and a separate thread set 116 with an intermediate step area 118 therebetween. Although a two-step thread arrangement is illustrated in Fig. 1, the invention is not limited thereto. Any interengaged thread connection is enhanced by the feature hereinafter described.

The forward end of pin member 110 is shown in an enlarged view in Fig. 2 and comprises the most forward thread 120 on the pin member followed (in a direction toward the nose) by a non-sealing area 121. Area 121 is then followed by an area entitled "primary internal seal (metal-to-metal)", hereinafter referred to as seal area 122. Finally, there is another non-sealing area 123 in front of area 122, which is on the bumper nose extension. Seal area 122 is on a conical surface on the pin member and mates with an accommodating conical surface on the box member. As mentioned, forward of seal area 122 is nose extension 124, which extension includes area 123. As illustrated, area 123 is opposite a portion of the box member that is in non-sealing contact. This is shown by a space therebetween, although in actual practice the space may be quite small. Seal area 122 is in press-sealing contact as described hereinafter but area 123 of extension 124 is not. It may be also apparent that the surface of the extension may be conical or cylindrical, since it does not enter into the sealing engagement between the box member and the pin member.

It has been discovered that the stiffness of the pin member is enhanced by the presence of extension 124 over a pin member which terminates at a point directly in front of seal area 122. That is, with an appreciable nose extension 124, the seal occurs in an area which is some distance from the tip or nose end rather than near it, thereby enhancing the integrity of the seal bearing. This is because the sealing area is less concentrated. In addition, the tendency of galling in the seal area is reduced.

A study has been made on having an extended end on three sizes of tubular connections, namely on tubular stock with an outside diameter of 114.3 mm (4.5 inches), 177.8 mm (7 inches), and 346.08 mm (13.625 inches). In each case, improvement in the operating characteristics as hereinafter described were observed. The studies pertained to connections including a pin member with different nose lengths or extensions as illustrated in Fig. 3. In one series of study, the pin member terminated as shown by the area labeled "Case A" only. In a second study the pin member terminated in an extension including the area labeled "Case B" as well as the preceding area. Finally, a study was performed involving an extension including the area referred to as "Case C" in addition to the previous areas. For convenience, the overall length of the seal area and, when applicable, the extension area in front thereof on the pin member is shown in relative inch dimensions. For example, Case A illustrates a pin member having a seal area in accordance with the prior art, which would be 6.35 mm (.25 inches) on a scale of 25.4 mm (1 inch) for Case C. The intermediate situation is Case B, shown as being 12.7 mm (one-half inch) in length with respect to the Case C dimension.

As shown in the table set forth below, seal contact forces were improved 32% to 49% by adding a "6.35 mm (.25 inch)" bumper nose extension (i.e., Case B with respect to Case A). The seal contact forces were improved up to 78% to 156% by adding a 19.05mm (.75 inch) bumper nose extension (Case C compared with Case A).

### SEAL BEARING FORCE CALCULATIONS

| | Total Seal Contact Force (kg) | | | | |
|---|---|---|---|---|---|
| Product | Case A | Case B | B/A | Case C | C/A |
| 114.3mm-18.7kgm⁻¹ | 8482 | 12655 | 149% | 15105 | 178% |
| 177.8mm-47.6kgm⁻¹ | 14923 | 20774 | 139% | 31933 | 210% |
| 346.1mm-130.9kgm⁻¹ | 15422 | 20275 | 132% | 39462 | 256% |

| | Total Seal Contact Force (lbs.) | | | | |
|---|---|---|---|---|---|
| Product | Case A | Case B | B/A | Case C | C/A |
| 4.511-12.6 lbs/ft | 18,700 | 27,900 | 149% | 33,300 | 178% |
| 7"-32.0 lbs/ft | 32,900 | 45,800 | 139% | 70,400 | 210% |
| 13.625"-88.0 lbs/ft | 34,000 | 44,700 | 132% | 87,000 | 256% |

The above results were based on a formula derived from the materials described in Formulas for Stress and Strain, Roark and Young, 5th edition.

The stresses in the connection were also analysed by computer modeling to observe the stresses imparted to a connection joint using ANSYS FEM stress analysis. Both a short nose model (equivalent to Case A above) and a long nose model (equivalent to Case C above) were loaded with minimum and maximum seal interference assembly load. The FEM results illustrate that the total contact force on the primary seal for the long nose model to be about 70% more than it is for the short nose model.

The following table are the results of determining the sealing force of short and long nose models with respect to 177.8mm (7 inch) tubular stock, 43.2kgm⁻² (29 lbs/ft).

| | Total Seal Contact Force (lbs.) | |
|---|---|---|
| | Minimum Interference | Maximum Interference |
| Short Nose | 8,503 | 19,905 |
| Long Nose | 14,435 | 33,427 |
| Long/Short | 170% | 168% |

In addition, it has also been observed that the primary seal contact width of the long nose model is more that 150% wider than for the short nose model. This may be shown more graphically by comparing the stress results as illustrated in Figs. 4 and 5, respectively. Fig. 4 is the stress distribution diagram for the short nose model (maximum interference) and Fig. 5 is the stress distribution diagram for the long nose model (maximum interference).

Now referring to Fig. 4 , the stresses in the pin member are shown below the seal contact line and the stresses in the box member are shown above the contact line for the short nose model, maximum interference. The entire primary seal occurs along area 150; however, it will be seen from the shaded areas that stresses occur in the pin member and the box member both where the seal occurs and where no sealing is occurring. Everything within area 152 of the pin member and area 154 of the box member are stressed to 1.97 x 10¹⁰ gm⁻² (28,000 psi) or greater. Area 156 for the pin member and area 158 for the box member are stressed to less than 1.97 x 10¹⁰ gm⁻² (28,000 psi) and more than 1.48 x 10¹⁰ gm⁻² (21,000 psi). The area outside of areas 156 and 158 are stressed less than 1.48 x 10¹⁰ gm⁻² (21,000 psi). It can be further demonstrated, although not shown in the diagram, that there are appreciably stressed areas beyond 5.91 x 10¹⁰ gm⁻² (84,000 psi) in the middle of areas 152 and 154, respectively.

Now referring to Fig. 5 , the stresses in the pin member are shown below the seal contact line and the stresses in the box member are shown above the contact line for the long nose model, maximum interference. The entire primary seal occurs along area 160, which is much larger than area 150 of Fig. 2 . Again, it will be seen from the shaded areas that stresses occur in the pin member and the box member both where the seal occurs and where no sealing is occurring. Again, everything within area 162 of the pin member and area 164 of the box member are stressed to 1.97 x 10¹⁰ gm⁻² (28,000 psi) or greater. Area 166 for the pin member and area 168 for the box member are stressed to less than 1.97 x 10¹⁰ gm⁻² (28,000 psi) and more than 1.48 x 10¹⁰ gm⁻² (21,000 psi). The area outside of areas 166 and 168 are stressed less than 1.48 x 10¹⁰ gm⁻² (21,000 psi). It can be demonstrated, in addition, although not shown in Fig. 5 , that there are very small stressed areas in the middle of areas 162 and 164, respectively, that are stressed beyond 5.91 x 10¹⁰ gm⁻² (84,000 psi).

It will be apparent from comparing Fig. 4 with Figure 5 that not only is seal area 160 much larger than seal area 50, but the comparably stressed areas of Fig. 5 are much larger than the respectively stressed areas of Fig. 4 . The peak stress of Fig. 4 is approximately 18% higher than the peak stress of Fig. 5 .

What is also not shown in Fig. 5 is that there is a secondary sealing surface that appears on the long nose model which does not correspondingly appear on the short nose model. Hence, it is demonstrated that the primary seal on the long nose model functions much like a beam with both ends fixed. This structure doubles the stability of the seal compared with the short nose model, which performs more like a cantilever beam.

Similar stress diagrams with minimum interference produce comparable results for short nose and long nose models.

## Claims

1. A threaded connection comprising a box member (112) having internal threads and a pin member (110) having external threads for mating with the threads on the box when the connection is made up, a conical seal surface (122) of the pin between the threads and the end of the pin and a conical surface on the box for engaging the conical seal surface (122) on the pin and forming a metal-to-metal seal when the connection is made up, said pin further having an end portion (124) spaced from the box and extending beyond the conical seal surface (122) characterized in that said end portion extends a distance at least equal to the projected length of the conical seal surface (122) along the longitudinal axis of the connection to stiffen the pin and increase the area of the conical seal surfaces (122) that are in sealing engagement.

2. The connection of Claim 1, characterized in that the end portion (124) of the pin extends beyond the conical seal surface (122) a distance between one and three times the projected length of the seal surface (122) along the longitudinal axis of the connection.

## Patentansprüche

1. Gewindeverbindung mit einem Muffenelement (112), welches Innengewinde aufweist, und mit einem Zapfenelement, welches Außengewinde aufweist, um mit dem Gewinde auf der Muffen zusammenzuwirken, wenn die Verbindung hergestellt wird, einer konischen Dichtungsfläche (122) des Zapfens zwischen dem Gewinde und dem Ende des Zapfens und einer konischen Oberfläche auf der Muffen zum Zusammenwirken mit der konischen Dichtungsfläche (122) auf dem Zapfen, wodurch eine Metall-auf-Metall-Dichtung gebildet wird, wenn die Verbindung hergestellt wird, wobei der Zapfen ferner einen Endabschnitt (124) aufweist, der von der Muffen beabstandet ist und sich über die konische Dichtungsfläche (122) hinaus erstreckt, dadurch gekennzeichnet, daß sich der Endabschnitt über eine Entfernung erstreckt, die zumindest gleich der projizierten Länge der konischen Dichtungsfläche (122) entlang der Längsachse der Verbindung ist, um den Zapfen abzusteifen und die Fläche der konischen Dichtungsflächen (122), die sich in dichtendem Zusammenwirken befinden, zu vergrößern.

2. Gewindeverbindung nach Anspruch 1, dadurch gekennzeichnet, daß sich der Endabschnitt (124) des Zapfens um eine Entfernung über die konische Dichtungsfläche (122) hinaus erstreckt, die zwischen dem Ein- und Dreifachen der projizierten Länge der Dichtungsfläche (122) entlang der Längsachse der Verbindung beträgt.

## Revendications

1. Raccordement fileté comprenant un élément formant boîte (112) ayant des tarauds et un élément formant broche (110) ayant des filets pour s'apparier avec les tarauds sur la boîte lorsque le raccordement est réalisé, une surface d'étanchéité conique (122) de la broche entre les filets et l'extrémité de la broche et une surface conique sur la boîte pour engager la surface d'étanchéité conique (122) sur la broche et former un joint métal-métal lorsque le raccordement est réalisé, ladite broche ayant en outre une partie d'extrémité (124) à distance de la boîte et s'étendant au-delà de la surface d'étanchéité conique (122), caractérisé en ce que ladite partie d'extrémité s'étend sur une distance au moins égale à la longueur projetée de la surface d'étanchéité conique (122) le long de l'axe longitudinal du raccordement pour rigidifier la broche et augmenter la zone des surfaces d'étanchéité coniques (122) qui sont en engagement d'étanchéité.

2. Raccordement selon la revendication 1, caractérisé en ce que la partie d'extrémité (124) de la broche s'étend au-delà de la surface d'étanchéité conique (122) sur une distance égale à une à trois fois la longueur projetée de la surface d'étanchéité (122) le long de l'axe longitudinal du raccordement.
